# EUROPÄISCHE PATENTSCHRIFT

(11) **EP 0 400 096 B1**
(45) Veröffentlichungstag und Bekanntmachung des Hinweises auf die Patenterteilung: **26.01.1994**
(21) Anmeldenummer: 89905047.0
(22) Anmeldetag: 11.05.1989
(51) Int. Cl.: B01D 29/50, B01D 29/88

(54) **FILTERELEMENT UND VERFAHREN ZUR FILTRATION**
FILTER ELEMENT AND FILTRATION PROCESS
FILTRE ET PROCEDE DE FILTRAGE

(30) Priorität: 24.05.1988 CH 1952/88
(43) Veröffentlichungstag der Anmeldung: 05.12.1990
(73) Patentinhaber: DrM.Dr. Hans Müller AG, CH-8708 Männedorf (CH)
(72) Erfinder: SCHUMACHER, Ivo, CH-8645 Jona (CH); STAHL, Werner, D-6740 Landau (DE); STOCKER, Walter, CH-8712 Stäfa (CH); MÜLLER, A., Patrick, CH-8712 Stäfa (CH)
(86) Internationale Anmeldenummer: CH8900085
(87) Internationale Veröffentlichungsnummer: WO8911322

(56) Entgegenhaltungen:
- GB-A- 793 286
- US-A- 2 276 118
- US-A- 4 561 980

## Beschreibung

Die vorliegende Erfindung betrifft ein Filterelement zum Einsatz in einen Behälter, wobei das Filterelement ein über seine Länge geschlossenes, mit einer unteren Oeffnung versehenes Zentralrohr besitzt, das mit wenigstens zwei radialsymmetrisch angeordneten zylindrischen Filtermitteln in Verbindung steht und ein Verfahren zur Filtration.

Ein Filterelement mit einem über seine ganze Länge geschlossenen, nur oben und unten offenen Zentralrohr zur Ableitung eines Filtrates ist aus der CH-A-631 352 bekannt. Das bekannte Filterelement ist zwar für eine Filtration zur Abtrennung feiner Partikel aus einer Suspension sowie für eine Restvolumenfiltration geeignet, genügt jedoch unter extremen Bedingungen, wo eine fremdstofffreie Filtration erforderlich ist, nicht den gestellten Anforderungen. Unter Fremdstoffen sind hier feinste Partikel zu verstehen, welche sich beispielsweise aus multifilen textilen Filtergeweben herauslösen können und beispielsweise bei der Serumherstellung entfernt sein müssen.

Aus der US-A-2 276 118 ist ein Filterelement bekannt, das aus einem Zentralrohr besteht, um welches radial zylindrische Filtermittel angeordnet sind, welche miteinander in Verbindung stehen. Die Filtratabfuhr und eine kurzfristige Zufuhr von Gas zum Rückspülen ist mit der bekannten Art des Filters nicht möglich, da beide Verfahrensschritte über die gleiche Leitung erfolgen müssen.

Filterkerzen aus Monofilgeweben, insbesondere aus Metalldraht sind per se bekannt. Sie weisen aber den Nachteil auf, dass mit ihnen keine dynamische Abreinigung möglich ist und daher ein aufgebrachter Filterkuchen nur sehr schwer und unvollständig zu entfernen ist. Die Drahtgewebe sind steif und haben eine relativ hohe Luftdurchlässigkeit. Zur Ablösung eines trockenen Filterkuchens mit einer anschliessenden Austragung aus einem Filterbehälter sind stossartig grössere Gasmengen als bei der Verwendung von textilen Filtermitteln erforderlich.

Aufgabe der Erfindung ist es, ein Filterelement zur Verfügung zu stellen, welches die Eigenschaften eines starren Monofilfiltermittels aufweist und dennoch eine einfache und vollständige Ablösung eines Filterkuchens erlaubt.

Eine weitere Aufgabe ist es, ein Verfahren zur Filtration mit dem Filterelement aufzuzeigen.

Die Aufgabe wird gemäss dem Kennzeichen nach Anspruch 1 dadurch gelöst, dass das Zentralrohr von einem Zylinder konzentrisch umgeben ist, der in seinem unteren Teil über die Länge des Zentralrohrs hinausragt und einen Boden bildet und über Rohre mit den Filtermitteln in Verbindung steht.

Das Zentralrohr weist gegenüber dem es umgebenden Zylinder einen relativ kleinen Querschnitt auf. Beide Rohre sind koaxial angeordnet. Diese Anordnung ermöglicht einen getrennten Weg für das Filtrat und einen getrennten Weg für das zur Entfernung des Filterkuchens verwendete Gas. Das hat den Vorteil, dass kurzfristig eine viel grössere Gasmenge als bei einer bekannten Rückspülung über die Filtratleitung zur Verfügung gestellt werden kann.

Gemäss einer bevorzugten Ausführung ragt der Zylinder für die Luftzufuhr über die Länge des Zentralrohres hinaus und bildet in seinem unteren Teil einen mehr oder weniger halbkreisförmigen Boden bzw. Raum. Der Boden kann aber auch flach sein.

Für sterilisierbare Ausführungen ist am tiefsten Punkt des Bodens ein Plättchen aus Filtermaterial für den Kondensatablauf vorgesehen.

Das Filterplättchen besteht zweckmässig aus dem gleichen Filtermittel wie zur Filtration verwendet, insbesondere aus einem Sintermetall, welches im Boden eingeschweisst ist.

Der das Zentralrohr umschliessende Zylinder steht mit den Filtermitteln, welche bevorzugt aus rohrförmigen Filterelementen aus Drahtgewebe bestehen, mit inrem Inneren über Rohre in Verbindung. Die Rohre haben die Aufgabe, während der Filtration das Filtrat unbehindert abzuführen und während der Entfernung eines Filterkuchens kurzfristig grosse Luftmengen hindurchzulassen. Diese Rohre können auch übereinander angeordnet sein und Filtermittel mit dem Zylinder, welche das Zentralrohr umschliessen, verbinden.

Die Filtermittel können einen runden oder mehreckigen Querschnitt aufweisen.

Es ist zweckmässig, das Sammelrohr zur Ableitung des Filtrats über dem Druckgasverteilerrohr anzuordnen.

Als vorteilhaft zur fremdstofffreien Filtration haben sich Metallgewebe als Filtermittel erwiesen. Anstelle der Metallgewebe können aber auch chemisch und thermisch resistente Monofile aus Kunststoff verwendet werden. Auch Sintermetall- oder Sinterkeramik-Kerzen sind verwendbar.

Die Erfindung soll anhand einer Zeichnung näher beschrieben werden. Es zeigen:
- Fig. 1: einen Längsschnitt durch ein Filterelement
- Fig. 2: einen Querschnitt durch das Filterelement
- Fig. 3: einen Längsschnitt durch die Variante eines Filterelementes
- Fig. 4: einen Längsschnitt durch den Seitenriss des oberen Teils des Filterelementes gemäss Fig. 3

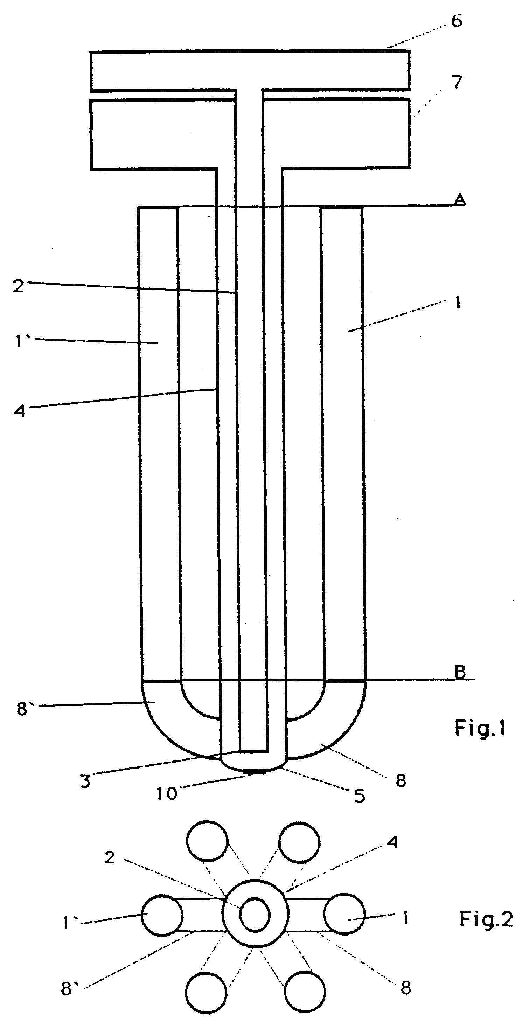

In Fig. 1 sind Filtermittel mit 1, 1' bezeichnet. Die Filtermittel 1, 1' sind radial um ein Zentralrohr 2 mit einer unteren Oeffnung 3 und einem Zylinder 4 mit einem Boden 5 angeordnet. Das Zentralrohr 2 ist mit einem Sammelrohr 6 und der Zylinder 4 mit einem Druckgasverteilerrohr 7 verbunden. Das Zentralrohr 2 und das Sammelrohr 6 sowie der Zylinder 4 und das Druckgasverteilerrohr 7 bilden in der Regel eine untrennbare Einheit. Die Filtermittel 1, 1' die beispielsweise aus Metallgewebezylindern bestehen, sind an ihrer oberen Oeffnung A verschlossen und an ihrer unteren Oeffnung B über Rohre 8, 8' mit dem Zylinder 4 verbunden. Im unteren Teil des Zylinders 4 ist ein Filtermittel 10 angebracht.

In Fig. 2 sind sechs gleiche Filtermittel 1 bzw. 1' radialsymmetrisch um den Zylinder 4 angeordnet und über die Rohre 8, 8' miteinander verbunden.

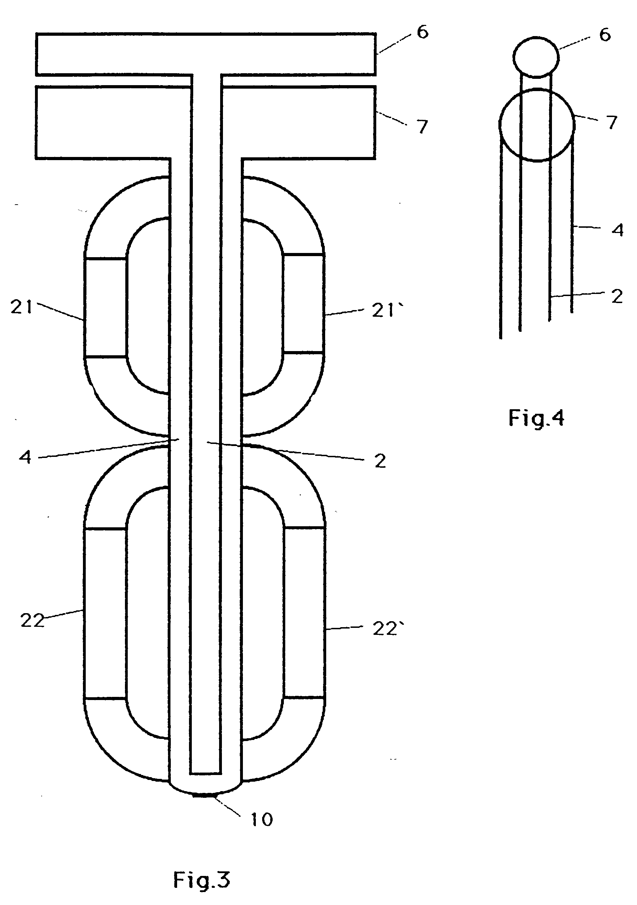

In Fig. 3 sind Filterrohre 21, 21' und 22, 22' stockwerkartig mit dem Zylinder 4 verbunden. Diese Variante ist zweckmässig,wenn das Filtermittel eine sehr hohe Luftdurchlässigkeit aufweist und der Luftbedarf zum Abreinigen nicht mehr genügt. Es können, abhängig von verfahrenstechnischen Kriterien, beliebig viele und beliebig lange Filterrohre bzw. Filtermittel vorgesehen werden. Auch der Durchmesser von Zentralrohr 2 und Zylinder 4 ist abhängig von der Gesamtfläche und Beschaffenheit der Filtermittel sowie von den zu filtrierenden Medien.

In Fig. 4 ist die Anordnung des im Zylinder 4 befindlichen Zentralrohres 2 im oberen Teil der Filterkerze gezeigt. Hier ist das Sammelrohr 6 über dem Druckgasverteilerrohr 7 angeordnet.

Die erfindungsgemässen Filterelemente sind in einem nicht gezeigten Behälter über das Sammelrohr 6 für ein Filtrat, und das Druckgasverteilerrohr 7 in bekannter Weise befestigt. In diesen Behälter wird die zu filtrierende, Feststoffe enthaltende Trübe beispielsweise unter Druck eingebracht. Im Betrieb, während der Filtration, tritt das Filtrat durch die Filtermittel 1, 1' hindurch. Das Klarfiltrat strömt über die Rohre 8, 8' in den Boden 5 des Zylinders 4 und von dort durch die untere Oeffnung 3 des Zentralrohres 2 in das Sammelrohr 6, von wo es den Filterbehälter verlässt. Nach Beendigung der Filtration wird mit Druckgas die Flüssigkeit in Filtrationsrichtung aus dem Inneren des Filterelementes entfernt. Zur Entfernung des so vorgetrockneten Filterkuchens wird beispielsweise Druckluft oder ein inertes Gas über das Druckgasverteilerrohr 7 gegeben und damit der Filterkuchen von den Filtermitteln 1, 1' gelöst.

Zur Sterilisation eines gereinigten Filterelementes wird das beim Sterilisieren mit Dampf entstehende Kondensat über ein Filtermittel 10 entfernt.

Die Funktionen vom Zentralrohr 2 und dem Zylinder 4 können aber auch umgekehrt werden. In einer solchen Varianten erfolgt die Gaszufuhr über ein grösser dimensioniertes Zentralrohr 2, welches mit Rohren 8 mit den Filtermitteln 1 in Verbindung stehen. Die Filtratzufuhr erfolgt dann durch den Ringspalt zwischen dem Zentralrohr 2 und dem Zylinder 4.

Das Prinzip der getrennten Rohre ist auch für den Einsatz mit Filtertüchern oder Membranen anwendbar.

Das erfindungsgemässe Filterelement stellt ein konstruktiv einfaches und damit ein wirtschaftliches Mittel zur Trockenaustragung eines Filterkuchens dar, zu dessen Ablösung kurzzeitig bezw. stossartig grössere Gasmengen erforderlich sind. Das Filterelement hat sich besonders bei der Abtrennung von Feinststoffen (migration free filtration) bewährt.

## Patentansprüche

1. Filterelement zum Einsatz in einen Behälter, wobei das Filterelement ein über seine Länge geschlossenes, mit einer unteren Öffnung (3) versehenes Zentralrohr (2) besitzt, das mit wenigstens zwei radialsymmetrisch angeordneten zylindrischen Filtermitteln (1, 1', 21, 21', 22, 22') in Verbindung steht, dadurch gekennzeichnet, dass das Zentralrohr (2) von einem Zylinder (4) konzentrisch umgeben ist, der in seinem unteren Teil über die Länge des Zentralrohrs (2) hinausragt und einen Boden (5) bildet und über Rohre (8, 8') mit den Filtermitteln (1, 1', 21, 21', 22, 22') in Verbindung steht.

2. Filterelement nach Anspruch 1, dadurch gekennzeichnet, dass im Boden (5) des Zylinders (4) ein Filtermittel (10) vorgesehen ist.

3. Filterelement nach Anspruch 1, dadurch gekennzeichnet, dass das Zentralrohr (2) in seinem oberen Teil in ein Sammelrohr (6) mündet, das über einem Druckgasverteilerrohr (7), welches mit dem oberen Teil des Zylinders (4) verbunden ist, angeordnet ist.

4. Filterelement nach Anspruch 1, dadurch gekennzeichnet, dass die Filtermittel (1, 1'; 21, 21'; 22, 22') aus Monofilgewebe bestehen.

5. Filterelement nach Anspruch 1, dadurch gekennzeichnet, dass die Monofilgewebe aus Metall bestehen.

6. Verfahren zur Filtration mit einem Filterelement nach einem der Ansprüche 1-5, dadurch gekennzeichnet, dass zur Entleerung des Innern eines Filtermittels ein Mediumstrom über den Zylinder (4) und das Zentralrohr (2) einem Sammelrohr (6) zugeführt wird.

## Claims

1. A filter element for insertion into a container, in which the filter element has a central tube (2), closed over its length, provided with a lower opening (3), which tube (2) is connected with at least two cylindrical filter means (1, 1', 21, 21', 22, 22'), arranged in radial symmetry, characterised in that the central tube (2) is surrounded concentrically by a cylinder (4), which projects in its lower part over the length of the central tube (2) and forms a base (5) and is connected via tubes (8,8') with the filter means (1, 1', 21, 21', 22, 22').

2. A filter element according to Claim 1, characterised in that in the base (5) of the cylinder (4) a filter means (10) is provided.

3. A filter element according to Claim 1, characterised in that the central tube (2) opens in its upper part into a collecting tube (6), which is arranged over a pressure gas distributor tube (7), which is connected with the upper part of the cylinder (4).

4. A filter element according to Claim 1, characterised in that the filter means (1,1'; 21,21'; 22,22') consist of monofilar fabric.

5. A filter element according to Claim 1, characterised in that the monofilar fabric consists of metal.

6. A method for filtration with a filter element according to one of Claims 1-5, characterised in that for emptying the interior of a filter means, a stream of medium is supplied via the cylinder (4) and the central tube (2) to a collecting tube (6).

## Revendications

1. Elément filtrant destiné à être placé dans un récipient, l'élément filtrant comportant un tube central (2) qui est fermé sur sa longueur et pourvu d'une ouverture inférieure (3), et qui est relié à au moins deux moyens filtrants cylindriques (1, 1', 21, 21', 22, 22') disposés suivant une symétrie radiale, caractérisé en ce que le tube central (2) est entouré de façon concentrique par un cylindre (4) qui dépasse, dans sa partie inférieure, de la longueur du tube central (2) et définit un fond (5), et qui est relié aux moyens filtrants (1, 1', 21, 21', 22, 22') par l'intermédiaire de tubes (8, 8').

2. Elément filtrant selon la revendication 1, caractérisé en ce qu'un moyen filtrant (10) est prévu dans le fond (5) du cylindre (4).

3. Elément filtrant selon la revendication 1, caractérisé en ce que le tube central (2) débouche, dans sa partie supérieure, dans un tube collecteur (6) qui est disposé au-dessus d'un tube distributeur de gaz comprimé (7) relié à la partie supérieure du cylindre (4).

4. Elément filtrant selon la revendication 1, caractérisé en ce que les moyens filtrants (1, 1';21, 21';22, 22') se composent de tissu monofilaire.

5. Elément filtrant selon la revendication 1, caractérisé en ce que les tissus monofilaires se composent de métal.

6. Procédé pour le filtrage à l'aide d'un élément filtrant selon l'une des revendications 1 à 5, caractérisé en ce que, pour l'évacuation de l'intérieur d'un moyen filtrant, un courant de fluide est amené vers un tube collecteur (6) par l'intermédiaire du cylindre (4) et du tube central (2).
